# EUROPÄISCHE PATENTANMELDUNG

(11) **EP 0 584 681 A1**
(43) Veröffentlichungstag der Anmeldung: **02.03.1994**
(21) Anmeldenummer: 93113043.9
(22) Anmeldetag: 14.08.1993
(51) Int. Cl.: B23H 11/00, B23H 7/02

(54) **Bearbeitungsmaschine für Werkstücke**

(30) Priorität: 18.08.1992 CH 2571/92
(71) Anmelder: Georg Fischer Maschinenbau AG, CH-8201 Schaffhausen (CH)
(72) Erfinder: Berger, Hansruedi, CH-8245 Feuerthalen (CH); Fankhauser, Fritz, CH-8203 Schaffhausen (CH)
(74) Vertreter: Szilagyi, Marianne

(57) **Zusammenfassung**

Es wird eine Bearbeitungsmaschine für Werkstücke, insbesondere mittels Funkenerosion vorgeschlagen, die ein Maschinenbett und mindestens einen Aufspannrahmen aufweist zur Aufnahme und Positionierung der Werkstücke, wobei die Basisrahmen und der Zwischenrahmen mindestens teilweise aus Mineralguss besteht.

Die vorgeschlagene Konstruktion ist wirtschaftlich in der Fertigung und garantiert eine präzisere Bearbeitung innerhalb von engsten Toleranzbereichen.

## Beschreibung

Die vorliegende Erfindung betrifft eine Bearbeitungsmaschine für Werkstücke, insbesondere mittels Funkenerosion, mit einem Maschinenbett, einem Aufspannrahmen zur Aufnahme und Positionierung der Werkstücke.

Die technische Entwicklung zeigt immer stärkeren Bedarf an hoch- und höchstpräzisen Bearbeitungsvorgängen. Dabei sind Toleranzbereiche von Mikrometern oft vorgegeben. Für die Präzision sowie für die thermische als auch die mechanische Stabilität einer Bearbeitungsmaschine, insbesondere mittels Funkenerersion, ist massgeblich der Aufspannrahmen zur Aufnahme und Positionierung der Werkstücke verantwortlich.

Auch das Maschinenbett ist für eine präzise Bearbeitung von Werkstücken von wesentlicher Bedeutung.

Bekannt sind Ausführungen aus metallischen Legierungen, aus Mineralguss und auch aus Granit. Die hierbei verwendeten Materialen weisen nur zum Teil hohe Dämpfungsfähigkeit auf. Die thermische und mechanische Stabilität von Bearbeitungsmaschinen wurde durch die bekannten Maschinenbetten, unter Einsatz von Mineralguss, wesentlich verbessert.

Ausgehend von diesem Stand der Technik stellt sich die vorliegende Erfindung die Aufgabe die thermische bzw. mechanische Stabilität einer Bearbeitungsmaschine derart zu verbessern, dass etwaige Abweichungen bereits bei der Aufspanneinrichtung, d.h. in unmittelbarer Werkstücknähe abgefangen werden.

Diese Aufgabe wird erfindungsgemäss dadurch gelöst, dass die Basis- bzw. der Zwischenrahmen für die Werkstücke mindestens teilweise aus Mineralguss gefertigt ist.

Weitere vorteilhafte Ausgestaltungen gehen aus den abhängigen Ansprüchen hervor.

Im Gegensatz zu den bekannten Schweisskonstruktionen für Aufspannrahmen, die durch ihre vielfältigen Verstrebungen den verschiedensten mechanischen Belastungen in Folge der Bearbeitung und des Gewichtes eines Werkstückes ausgesetzt sind, (Biegung und Torsion) weist ein aus Mineralguss hergestellter Aufspannrahmen eine verbesserte Stabilität auf, sowohl mechanischer als auch thermischer Art.

Erfolgt zudem die Verbindung eines aus Mineralguss gefertigten Aufspannrahmens mit einem aus ebensolchem Mineralguss gefertigten Maschinenbett so kann die Bearbeitung des Werkstückes in engsten Toleranzbereichen erfolgen.

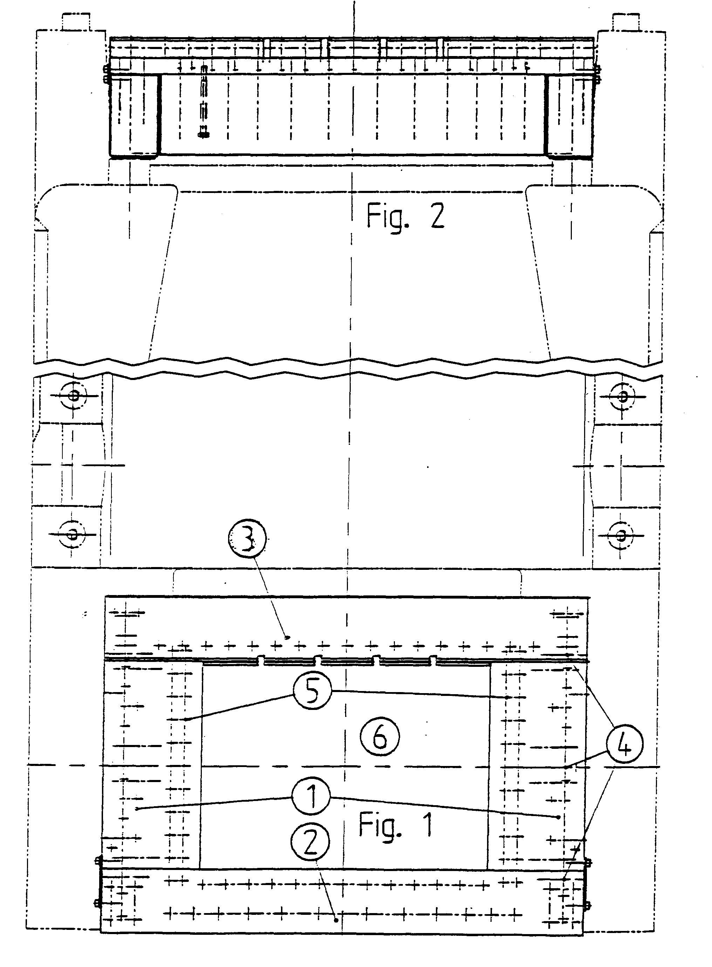

Aus den beiliegenden Figuren ist in der Fig. 1 eine Draufsicht auf einen Aufspannrahmen dargestellt. Dieser besteht aus den zwei parallel zueinander angeordneten Basisrahmenteilen 1 die an ihren Enden je miteinander einmal mittels eines Zwischenrahmens 2 und eines Anschlages 3 verbunden sind.

Die Basisrahmen 1 weisen Bohrungen auf die zur Befestigung des Aufspannrahmens mit dem Maschinenbett dienen. Ausserdem sind Bohrungen 5 vorgesehen, die zur Fixierung und Positionierung des zu bearbeitenden Werkstückes dienen. Das Werkstück wird im hohlen Bereich 6 des Rahmens positioniert, damit der Funkenerosionsdraht durchgehend durch das Werkstück geführt werden kann.

Es ist leicht zu erkennnen, dass bei der beschriebenen Werkstückanordnung die Stabilität der Rahmenteile ein wesentliches Kriterium für eine präzise Aufspannung und Bearbeitung darstellt.

Aus der Figur 2 in der eine Ansicht auf den Aufspannrahmen dargestellt ist, ist leicht zu erkennen, welchen Beanspruchungen dieser Aufspannrahmen ausgesetzt ist. Dies insbesondere dann, wenn der Rahmen aus einer Schweisskonstruktion besteht.

Es ist auch von Vorteil die Basisrahmen mit dem Maschinenbett einstückig aus Mineralguss zu giessen um optimale Steifigkeit während der Bearbeitung zu garantieren.

Die vorgeschlagene Konstruktion eignet sich besonders, die Belastungen vom Werkstück aufzufangen und ist vielfältig in der Gestaltungsmöglichkeit. Die Bearbeitbarkeit des Aufspannrahmens ist wesentlich einfacher, insbesondere auch deshalb weil die Aussenkonturen und die Bohrungen direkt abgeformt bzw. mit Eingiessteilen gegossen werden können.

Es handelt sich insgesamt um eine stabile, präzise und wirtschaftliche Lösung.

## Patentansprüche

1. Bearbeitungsmaschine für Werkstücke insbesondere mittels Funkenerosion mit einem Maschinenbett, einem Aufspannrahmen zur Aufnahme und Positionierung der Werkstücke, dadurch gekennzeichnet, dass die Basis- und der Zwischenrahmen mindestens teilweise aus Mineralguss gefertigt ist.

2. Maschine nach Anspruch 1, dadurch gekennzeichnet, dass die Basis- und der Zwischenrahmen eine Verbundkonstruktion aus Mineralguss, Edelstahl und Kohlenfasern sind.

3. Maschine nach Anspruch 1, dadurch gekennzeichnet, dass die Basisrahmen mit dem Maschinenbett einstückig gefertigt sind.

4. Maschine nach einem der Ansprüche 1 bis 3, dadurch gekennzeichnet, dass die einzelnen Elemente des Aufspannrahmens separat geformt werden.
